# EUROPÄISCHE PATENTSCHRIFT

(11) **EP 2 825 031 B1**
(45) Veröffentlichungstag und Bekanntmachung des Hinweises auf die Patenterteilung: **21.06.2017**
(21) Anmeldenummer: 13712514.2
(22) Anmeldetag: 14.03.2013
(51) Int. Cl.: A01K 1/12

(54) **MELKSTANDANORDNUNG MIT EINER INNENROBOTERVORRICHTUNG**
MILKING PARLOR ARRANGEMENT WITH AN INNER ROBOT DEVICE
INSTALLATION DE TRAITE COMPORTANT UN DISPOSITIF ROBOTIQUE INTERNE

(30) Priorität: 14.03.2012 DE 102012102133
(43) Veröffentlichungstag der Anmeldung: 21.01.2015
(73) Patentinhaber: GEA Farm Technologies GmbH, 59199 Bönen (DE)
(72) Erfinder: KRONE, Otto, 49479 Ibbenbüren (DE); SUHR, Olaf, 59302 Oelde (DE); MADER, Thomas, 33378 Rheda-Wiedenbrück (DE); SCHULZE WARTENHORST, Bernhard, 48231 Warendorf (DE); SCHNEIDER, Erich, 59229 Ahlen (DE)
(74) Vertreter: Kleine, Hubertus
(86) Internationale Anmeldenummer: PCT/EP2013/055265
(87) Internationale Veröffentlichungsnummer: WO 2013/135829

(56) Entgegenhaltungen:
- WO-A2-93/13651
- DE-U1- 29 522 237
- US-A- 5 596 945

## Beschreibung

Die Erfindung betrifft eine Melkstandanordnung nach dem Oberbegriff des Anspruchs 1.

Eine derartige Melkstandanordnung wird zum maschinellen Melken von milchgebenden Tieren verwendet. Milchgebende Tiere sind beispielsweise Kühe, Büffel, Ziegen, Schafe usw. Die Melkstandanordnung weist Melkstände auf, die durch Platzteiler getrennt sind. Der Melkvorgang kann mittels so genannter Melkroboter automatisiert werden. Es sind z.B. Melkkarusselle im Einsatz.

Unter dem Begriff Melkstandanordnung sind Anordnungen von Melkständen zu verstehen, wobei eine Winkelstellung einer gedachten Längsachse eines zu melkenden Tieres in einem Melkstand zu einer Referenzlinie zwischen 0° und 90° betragen kann. Als Referenzlinie wird beispielsweise die Längsseite einer geradlinigen Grube oder eine Tangente einer kreisförmigen Grube verwendet, welche der Aufenthaltsort des Melkpersonals ist. Melkstandanordnungen sind z.B. bewegliche und unbewegliche Melkstandanordnungen. Bewegliche Melkstandanordnungen sind z.B. Melkkarusselle als Außenmelker und Innenmelker, beide Arten mit beliebiger Drehrichtung. So genannte Side-By-Side-Melkstände können auch als bewegliche Melkstandanordnungen ausgebildet sein. Weiterhin sind Gruppenmelkstände auch unbeweglich, wie z.B. Fischgrätmelkstände und Tandemmelkstände. Diese Auflistung ist nur beispielhaft und nicht eingrenzend.

EP 1 084 611 B1 beschreibt eine Roboterarmkonstruktion mit einer schwenkbaren Trageinheit für ein Melkzeug. Die Konstruktion ist an einer oder mehreren Schienen entlang einer oder mehrerer Melkboxen bewegbar.

Die bestehende Automatisierungstechnik ist auf Grund geringen Durchsatzes nicht oder nur eingeschränkt für Großanlagen geeignet. Die immer weiter steigenden Anforderungen insbesondere nach hohen Durchsatzzahlen und kontinuierlichen Betrieb erfordern bei heutigen Melkrobotern, die komplex und kostenaufwendig sind, eine gemeinsame Nutzung für mehrere Melkplätze. Dies kann sich nachteilig auswirken, u.a. aufgrund hoher Komplexität und damit verbundener hoher Ausfallwahrscheinlichkeit, diskontinuierlicher Betrieb, gesperrte Bereiche für das Personal (Sicherheit im Roboterbereich). Ein Zugriff der Ansetztechnik ist zeitlich und räumlich begrenzt. Eine Verschmutzung der Melktechnik kann bei Zuführung von Zitzenbechern von hinten durch die Beine der zu melkenden Tiere erhöht sein. Die Anlage kann nur geringe Toleranz für das Abfallen von Zitzenbechern aufweisen. Aufgrund komplexer Technik können entsprechend hohe Betriebs- und Wartungskosten auftreten.

US-A-5596945 offenbart eine Melkstandanordnung gemäß dem ersten Teil des Anspruchs 1. Vor diesem Hintergrund besteht die Aufgabe der Erfindung darin, eine verbesserte Melkstandanordnung sowie einen Melkstand zu schaffen.
Diese Aufgabe wird durch eine Melkstandanordnung mit den Merkmalen des Anspruchs 1 gelöst.
Eine erfindungsgemäße Melkstandanordnung, insbesondere Melkkarussell, umfasst mindestens einen Melkstand zum Melken von milchgebenden Tieren, eine Innenrobotervorrichtung mit mindestens einem Roboterarm, wobei der mindestens eine Melkstand zwei Längsseiten und zwei Schmalseiten, nämlich eine Kopfschmalseite und eine Hinterteilschmalseite, von denen eine Schmalseite als Kopfschmalseite der Kopfseite eines zu melkenden milchgebenden Tieres zugeordnet ist, und eine Armeinrichtung mit einem Melkzeug, welche aus einer Parkposition in eine Arbeitsposition und zurück verstellbar ist. Der mindestens eine Roboterarm ist an der Kopfschmalseite des mindestens einen Melkstands der Melkstandanordnung, welche der Kopfseite der zu melkenden Tiere zugeordnet ist, zur Verstellung der Armeinrichtung angeordnet. Dabei kann der Roboterarm bei einem Melkkarussell in einem Innenraum der Melkstandanordnung angeordnet sein.
Der Melkstand weist zwei Längsseiten und zwei Schmalseiten auf. Von den Schmalseiten wird eine als Kopfschmalseite bezeichnet, welche der Kopfseite eines in dem Melkstand befindlichen zu melkenden Tieres zugeordnet ist. Entsprechend wird die andere Schmalseite als Hinterteilschmalseite bezeichnet und ist dem Hinterteil des in dem Melkstand befindlichen zu melkenden Tieres zugeordnet.
Bei einer Melkstandanordnung mit nebeneinander angeordneten rechtwinkligen Melkständen, die jeweils parallele Längsseiten aufweisen, wie es z.B. bei einer Side-By-Side-Anordnung der Fall ist, ist die Armeinrichtung z.B. in einem Platzteiler parallel zu einer gedachten Längsachse des zu melkenden Tieres angeordnet. Dabei wird vereinfacht angenommen, dass das zu melkende Tier mit seiner gedachten Längsachse während des Melkvorgangs in einem Idealzustand still steht. Eine Schmalseite, nämlich die Kopfschmalseite, des Melkstands ist der Kopfseite des zu melkenden Tieres zugeordnet.
Im Falle einer Melkstandanordnung mit kreisförmig angeordneten Melkständen wie bei einem Melkkarussell sind die Längsseiten der Melkstände nicht parallel. In diesem Fall sind die Längsseiten Abschnitte von Radien eines Kreises des Melkkarussells und schneiden sich in gedachter Verlängerung im Mittelpunkt dieses Kreises bzw. im Drehpunkt des Melkkarussells, wobei sie einen Mittelpunktswinkel bilden. Die gedachte Längsachse des zu melkenden Tiers verläuft im Idealfall auch durch den Drehpunkt und halbiert den Mittelpunktswinkel. Dieser Fall ist im weiteren Verlauf hier mit dem Begriff "annähernd parallel" abgekürzt.

Unter dem Begriff Außenbereich bzw. Bedienbereich ist der Bereich zu verstehen, in welchem sich Melkpersonal aufhält, aber kein Roboter angeordnet ist. Dies kann z.B. der Bereich um den Außenumfang eines Melkkarussells oder der Bereich einer Grube zwischen zwei in Linie angeordneten Side-By-Side-Melkstandanordnungen.

Der Begriff Technikbereich ist der Bereich, in welchem die Robotervorrichtung angeordnet ist.

Es ist in einer Ausführung vorgesehen, dass die Armeinrichtung mit dem Melkzeug in der Parkposition längs einer der Längsseiten des Melkstands seitlich eines zu melkenden Tieres angeordnet ist. Dadurch ist die Armeinrichtung mit dem Melkzeug in der Parkposition nicht im Bereich des zu melkenden Tieres und stört dieses nicht, z.B. beim Eintreten in den Melkstand.

In einer Ausführung ist der Roboterarm in einem Vollautomatikbetrieb zur Verstellung der Armeinrichtung von der Parkposition in der Arbeitsposition in eine Ansetzposition zum automatischen Ansetzen des Melkzeugs an die Zitzen des zu melkenden Tieres ausgebildet.

In einer Ausführung ist der Roboterarm an einer Schiene, insbesondere in einem Ansetzbereich, verfahrbar und geführt.

Es können in einer anderen Ausführung auch mehrere Roboterarme auf einer Plattform an der Schiene verfahrbar und geführt sein.

Wenn die Melkstandanordnung als Melkkarussell ausgeführt ist, ist die Schiene konzentrisch zu einem Drehpunkt des Melkarussells angeordnet, und bei einer Melkstandanordnung in gerader Ausführung, beispielsweise eine Side-By-Side-Anordnung, parallel zu der Melkstandanordnung angeordnet.

Die Schiene ist in einer weiteren Ausführung an der Melkstandanordnung befestigt. Dadurch kann eine Bewegung der Melkstandanordnung, z.B. als Melkkarussell eine Drehbewegung im oder gegen den Uhrzeigersinn, synchron auf die Schiene und somit auf den mindestens einen Roboterarm übertragen werden.

Alternativ kann der mindestens eine Roboterarm der Innenrobotervorrichtung an der Schiene synchron mit einer Bewegung der Melkstandanordnung und unabhängig von der Bewegung der Melkstandanordnung verfahrbar sein.

Durch den mindestens einen Roboterarm kann von diesem auf jeden Melkstand zugegriffen werden. Es ist nur eine Innenrobotervorrichtung mit diesem mindestens einen Roboterarm zum Ansetzen des Melkzeugs erforderlich.

Der Roboterarm kann alle Ansetzvorgänge nacheinander ausführen. Bei mehreren Roboterarmen ist ein Durchsatz erhöht.

Mehrere Roboterarme können auch an der Schiene so verfahren werden bzw. in verschiedenen Bereichen angeordnet und in diesen verfahren werden, um nicht nur Ansetzvorgänge, sondern auch Abnehmvorgänge vorzunehmen. Dadurch ist eine hohe Anpassungsfähigkeit an unterschiedliche Betriebe möglich.

In einer weiteren Ausführung können die Melkzeuge durch die Armeinrichtung und mithilfe einfacher Aktuatoren, z.B. Ketten oder Abnahmeseile, die sich an jedem Melkstand befinden, abgenommen werden.

Ein weiterer Vorteil besteht darin, dass die Melkstände alle gleich mit der Armeinrichtung und dem Melkzeug, d.h. mit einem passiven, mechanischen Melkmodul, ausgerüstet werden können, wobei keine Antriebe oder nur einfache Antriebe zum Abnehmen pro Melkstand erforderlich sind.

Wenn jeder Melkplatz mit dem gleichen Melkmodul, d.h. Armeinrichtung und Melkzeug, versehen ist, können keine mechanischen Verkopplungen zu benachbarten Melkständen auftreten.

Die Schiene ist vorzugsweise oberhalb der zu melkenden Tiere angeordnet und liegt somit außerhalb der Reichweite der Tiere. Eine verringerte Verschmutzungsgefahr ist möglich.

Vorteilhafte Weiterbildungen und Ausgestaltungen des Melkzeugs bzw. des Melkstands sind Gegenstand der jeweiligen abhängigen Ansprüche.

Die zu melkenden Tiere können über einen oder mehrere Ein- und Ausgänge die Melkstandanordnung betreten bzw. verlassen. Mit mehreren Roboterarmen ist so ein hoher Durchsatz möglich.

In einer anderen Ausführung ist die Schiene parallel zu der Melkstandanordnung angeordnet. Dadurch wird es möglich, dass der mindestens eine Roboterarm der Innenrobotervorrichtung an der Schiene synchron mit einer Bewegung der Melkstandanordnung und unabhängig von der Bewegung der Melkstandanordnung verfahrbar ist. Mit anderen Worten, der Roboterarm kann während der Bewegung der Melkstandanordnung den Ansetzvorgang des Melkzeugs ausführen, dann in seine Ausgangsstellung zurückgefahren, an der Schiene gegen die Bewegung der Melkstandanordnung zum nachfolgenden Melkstand bewegt werden und wieder einen Ansetzvorgang vornehmen. Bei mehreren Roboterarmen bestimmt der langsamste Roboterarm das Tempo der Einheit aller Roboterarme.

In einer noch anderen Ausführung ist vorgesehen, dass der mindestens eine Roboterarm in einer Radialrichtung für eine Verstellung des Melkzeugs aus der Parkposition in die Arbeitsposition und zurück verstellbar ausgebildet ist. Der Roboterarm benötigt somit zum Eingriff nur eine Richtung in einer Ebene. Ein Greifabschnitt kann zusätzliche Manipulationsachsen ermöglichen, um das Melkzeug zu positionieren.

In einer alternativen Ausführung weist der mindestens eine Melkstand einen von einer Oberfläche einer Standeinheit des Melkstands durch eine Stufe getrennten, höher angeordneten Bereich mit einer Vorderfußplatte auf. So liegt der Roboterarm außerhalb des Sichtbereiches des Tieres.

Dabei kann der mindestens eine Roboterarm in der Radialrichtung seitlich und parallel oder im Wesentlichen annähernd parallel zu der Längsachse des zu melkenden Tieres verstellbar ausgebildet sein. Er verfährt somit in einem Bereich, der vom Schmutz- und Feuchtigkeitsbereich des zu melkenden Tieres beabstandet ist.

In einer alternativen Ausführung kann der mindestens eine Roboterarm in der Radialrichtung entlang der Längsachse des zu melkenden Tieres verstellbar ausgebildet sein. Dabei legt der Roboterarm den größten Weg unterhalb der Vorderfußplatte zurück, was auch unbemerkt von dem Tier erfolgt. Dabei kann der mindestens eine Roboterarm in der Radialrichtung auch in Richtung der Längsachse des zu melkenden Tieres durch eine Öffnung der Stufe hindurch verstellbar ausgebildet sein.

In einer weiteren Ausführung ist die Armeinrichtung mit dem Melkzeug in der Parkposition in einem Platzteiler, der an einer Längsseite des Melkstands angeordnet ist, oder in einem Bereich in einer Längsachse des Platzteilers angeordnet und seitlich zu dem zu melkenden Tier in die Arbeitsposition verstellbar. Somit liegt auch das Melkzeug außerhalb des Schmutz- und Feuchtigkeitsbereich des zu melkenden Tieres.

In einer noch weiteren Ausführung ist vorgesehen, dass die Armeinrichtung einen Oberarm und einen damit verschwenkbar gekoppelten Unterarm aufweist. Auf diese Weise kann die Armeinrichtung mit dem Melkzeug eingeklappt und mit geringem Raumbedarf in der Parkposition angeordnet werden.

Hierbei kann die Armeinrichtung mittels einer Lagereinheit drehbar und in einer Vertikalrichtung gelagert und geführt sein. Die Lagereinheit kann oberhalb eines zu melkenden Tieres, unterhalb einer Standeinheit des mindestens einen Melkstands oder auf der Standeinheit des mindestens einen Melkstands angeordnet sein. Eine Anpassung an unterschiedliche Einbausituationen ist so möglich.

In einer noch weiteren Ausführung kann die Armeinrichtung mit dem Melkzeug in der Parkposition in dem Platzteiler in einer Öffnung einer Verkleidung des Platzteilers angeordnet sein. Damit ist die Armeinrichtung mit dem Melkzeug vollständig außerhalb der Sicht des zu melkenden Tieres, wenn dies den Melkstand betritt. Außerdem bietet die Verkleidung nicht nur einen Sichtschutz, sondern einen höheren Verletzungsschutz für das zu melkenden Tier wie auch einen Schutz vor Schmutz und Feuchtigkeit, wenn die Öffnung der Verkleidung des Platzteilers mit der darin in der Parkposition angeordneten Armeinrichtung mit Melkzeug mit einer Schutzabdeckung verschließbar ausgebildet ist. Die Schutzabdeckung kann mit Betätigungsabschnitten, z.B. versenkte Öffnungen mit Haken, versehen sein, die von dem Roboterarm betätigbar sind.

Ein weiterer Vorteil ergibt sich, wenn in dem Platzteiler oder in dem Bereich der Parkposition der Armeinrichtung mit dem Melkzeug eine Reinigungseinrichtung für das Melkzeug angeordnet ist. Aufgrund des geringen Raumbedarfs der eingeklappten Armeinrichtung mit Melkzeug in der Parkposition kann auch die Reinigungseinrichtung in dem Bereich der Längsachse des Platzteilers und/oder in dem Platzteiler selbst angeordnet und/oder integriert sein.

In einer noch weiteren Ausführung weist die Armeinrichtung mit dem Melkzeug einen Überlastschutz auf. Dadurch ergibt sich eine Toleranz gegenüber heftigen Tierbewegungen, aktives Ausweichen mit Hilfe einer Objekterkennung über eine Kamera, die auch zu Positionierzwecken und anderen Aufgaben verwendbar ist. Außerdem kann eine Art Einklemmschutz über den Roboterarm beim Positionieren gebildet sein, wenn dieser mit einer Überwachung des Leistungsverbrauchs seiner Motoren ausgebildet ist. Es können auch weitere Sensoren dazu am Roboterarm integriert sein. Außerdem kann der Roboterarm z.B. passive Sensoren am Melkzeug und/oder der Armeinrichtung beim Positionieren aktivieren.

Für eine einfache Handhabung beim Positionieren durch den Roboterarm kann die Armeinrichtung eine Parallelführung für das Melkzeug aufweisen.

Diese Parallelführung kann Schubstangen oder/und Zugmittel aufweisen. Dabei kann sie bevorzugt innerhalb der Arme der Armeinrichtung eingebaut sein. Die Zugmittel können beispielsweise Riemen sein. Diese Zugmittel können dann selbst, da sie eine gewisse Elastizität aufweisen, einen Überlastschutz bilden bzw. unterstützen. Es können aber auch zusätzliche Feder und Dämpfer vorgesehen sein, die mit den Zugmitteln gekoppelt sind, z.B. Spanneinrichtungen.

In einer weiteren Ausführung ist vorgesehen, dass der Roboterarm mindestens einen Positionssensor aufweist. Dieser kann zur Positionierung der Zitzenbecher des Melkzeugs am Euter verwendet werden. Aber es sind auch zusätzliche Vorteile dadurch möglich. Der Positionssensor kann ein optischer Sensor, z.B. eine Kamera sein, welche Bewegungen des zu melkenden Tieres erfasst. Er kann weiterhin als Eingabegerät für eine Gestik-Steuerung benutzt werden. Außerdem kann die Kamera das Euter mit den Zitzen aufnehmen, wodurch die Eutergesundheit (Abnormitäten, Aussehen, Schwellungen, Sauberkeit) bewertet werden kann. In Folge davon können kranke Tiere und Tiere mit schmutzigen Eutern aussortiert werden (durch eine automatische Anlage, z.B. eine Selektionsvorrichtung, oder Personal). Die Ausscheidungen des zu melkenden Tieres können überwacht werden, wodurch eine bedarfsgerechte Reinigung des Melkstands möglich wird. Die Zitzenbecher können transparent ausgebildet sein und optional eingebaute Kontrastelemente (Ringe, Stäbe, Zylinder usw.). Die Transparenz ermöglicht eine Kontrolle, ob sich die Zitzen in den Bechern richtig befinden und ob ein Milchfluss erfolgt. Die Kontrastelemente dienen zur Objektfindung der Zitzenbecher sowie der Kalibrierung der Kamera des Positionssensors.

Die Melkstände können eine abgeschrägte Kotrinne am Boden der Standeinheit zur Verringerung der Verschmutzung durch herunterfallende Exkremente des zu melkenden Tieres aufweisen.

Der Roboterarm kann weitere Sensoren aufweisen, die mit seiner Steuerung verbunden sind. So kann die Steuerung mit Hilfe der Kamera durch Gestik und mittels Akustiksensoren durch Akustik beispielsweise Komponenten des Roboterarms, die Armeinrichtung und/oder das Melkzeug ein- und ausschalten, ein- und ausfahren und/oder reinigen.

Die Melkstandanordnung kann auch eine andere als kreisförmige Form aufweisen. So ist z.B. eine Bogenform oder Gerade möglich.

In einer alternativen Ausführung kann die Armeinrichtung in einem Halbautomatikbetrieb von der Parkposition in die Arbeitsposition mittels eines einfachen Aktuators verstellbar sein, wobei die Arbeitsposition eine feste Vorposition ist, die durch Anschlagmittel vorher festlegbar ist, wobei das Melkzeug in der Vorposition in einer für einen Melker günstigen Position steht.

Weitere Vorteile sind im Folgenden aufgelistet:
- Modularer, flexibler Aufbau des Melkmoduls ist für Einzelplätze, Gruppenmelkstände und Melkkarusselle geeignet.
- Hohe Arbeitsproduktivität
- Hohe Betriebsbereitschaft durch redundante Melkmodule und mehrere Roboterarme
- Redundanter Aufbau mit hoher Fehlertoleranz
- Toleranz gegenüber heftigen Tierbewegungen und Schlägen/Tritte
- Der Außenbereich kann jederzeit vom Personal vollständig ohne Behinderung und Gefährdung durch Vorrichtungen betreten werden, um z.B. korrigierend oder/und helfend einzugreifen. Der Innenraum ist nur teilweise von der Innenrobotervorrichtung belegt. Eine zusätzliche Absicherung des Roboterbereichs im Technikbereich ist nicht erforderlich, da sich das Personal im Außenbereich aufhält und der Roboter im Innenraum getrennt davon angeordnet ist.
- Hohe Anpassungsfähigkeit in unterschiedlichen Automatisierungsstufen
- Roboterarme und Melkzeuge sind beim Betreten des Melkstandes nicht im Sichtbereich des zu melkenden Tieres und teilweise auch nicht beim Ansetzen bzw. Abnehmen.
- Einfache Montage und Demontage sowie Wartung der Melkstandanordnung
- Ein Notmelken ist möglich durch eine Rückfallebene. Der Melker kann bei jedem Melkstand von außen eingreifen und z.B. abgefallenes oder abgetretenes Melkzeug wieder anlegen.
- Der Ansetzvorgang verläuft hygienisch von der Seite.
- Ein Komplexitätsgrad ist gering.
- Es besteht die Fähigkeit zur Massenproduktion.
- Eine Variantenvielfalt kann reduziert werden.
- Bestehende manuelle Melkplätze können nachgerüstet werden.

Weitere Vorteile und Einzelheiten gehen aus dem in den Figuren der Zeichnung dargestellten Ausführungsbeispiel hervor. Hierbei zeigen:
- Figur 1: eine schematische Draufsicht auf ein Ausführungsbeispiel einer erfindungsgemäßen Melkstandanordnung;
- Figur 2: eine schematische Draufsicht auf eine Variation des Ausführungsbeispiels nach Figur 1;
- Figur 3: eine schematische Seitenansicht der erfindungsgemäßen Melkstandanordnung nach Figur 2;
- Figur 4: eine vergrößerte Ansicht des umkreisten Bereichs in Figur 3;
- Figur 5: eine schematische Prinzipskizze eines Innenroboters;
- Figuren 6-6a: eine Längsschnittansicht und Vorderansicht eines Ausführungsbeispiels eines Roboterarms;
- Figuren 7-7a: verschiedene Schnittansichten des Roboterarms nach Figur 6;
- Figur 8: eine schematische Prinzipskizze eines zweiten Ausführungsbeispiels eines Melkstands der erfindungsgemäßen Melkstandanordnung; und
- Figur 9: eine schematische Draufsicht des Melkstands nach Figur 8.

In den Figuren sind gleiche bzw. ähnliche Funktionselemente mit gleichen Bezugszeichen versehen.

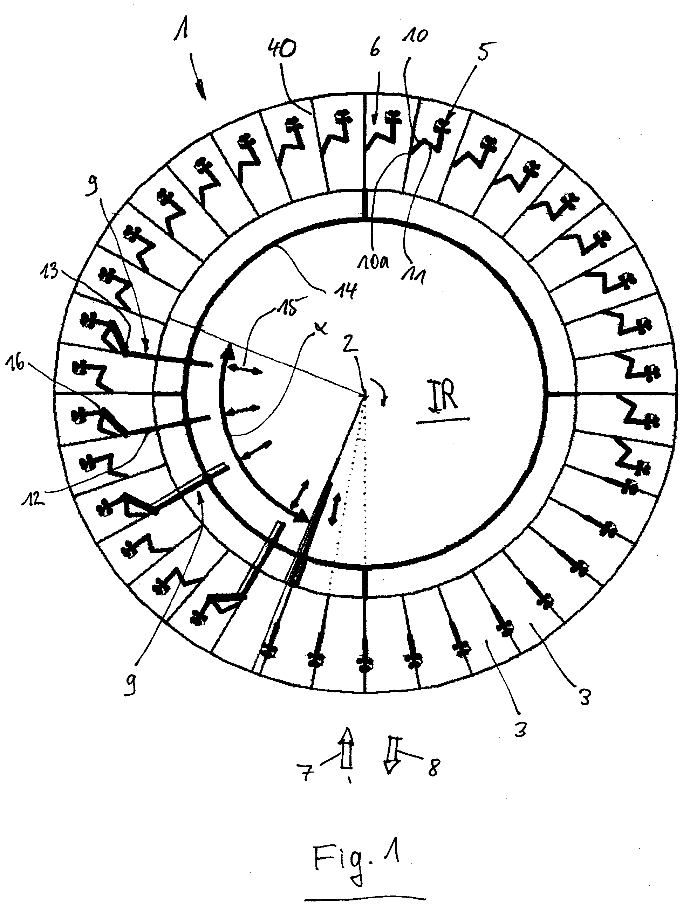

Figur 1 zeigt eine schematische Draufsicht auf ein Ausführungsbeispiel einer erfindungsgemäßen Melkstandanordnung 1.

Die Melkstandanordnung 1 ist nach Art eines so genannten Außenmelker-Karussells aufgebaut. Dabei stehen die zu melkenden Tiere mit ihrem Kopf zu einer Mitte, d.h. einem Drehpunkt 2, gerichtet. Das Karussell ist um den Drehpunkt 2 im Uhrzeigersinn drehbar. In diesem Beispiel sind sechsunddreißig Melkstände 3 am Umfang des Karussells angeordnet. Jeder Melkstand weist zwei Längsseiten und zwei Schmalseiten auf. Eine Schmalseite wird als Kopfschmalseite bezeichnet und ist der Kopfseite eines zu melkenden Tieres, das sich in dem Melkstand 3 befindet, zugeordnet. In Fig. 1 weisen die Kopfschmalseiten der Melkstände 3 zu einem Innenraum IR, und die anderen Schmalseiten, welche als Hinterteilschmalseiten bezeichnet werden, sind dem Hinterteil des zu melkenden Tieres zugeordnet. Die Melkstände 3 sind durch Platzteiler 40 getrennt. Die Platzteiler 40 werden auch z.B. als Seitengitter bezeichnet und sind annähernd parallel zur Längsachse eines zu melkenden Tieres ausgerichtet. Die Melkstandanordnung 1 wird zum maschinellen Melken von milchgebenden Tieren, z.B. Kühe, mittels Melkzeugen 5 verwendet. Für jeden Melkstand 3 ist jeweils ein Melkzeug 5 vorgesehen, welches über eine Armeinrichtung 6 aus einer Parkposition in eine Arbeitsposition unter das Euter einer Kuh in einem Melkstand 3 verstellbar ist. Jedes Melkzeug 5 ist innerhalb eines Platzteilers 40 oder im Längsbereich eines Platzteilers 40 zwischen den Melkständen 3 angeordnet.

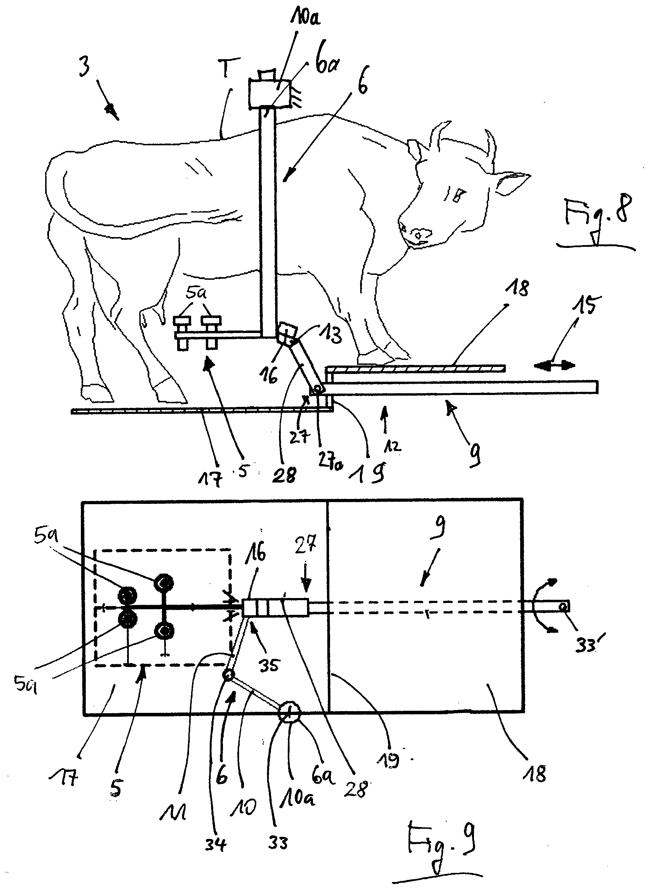

Das Karussell kann von den zu melkenden Tieren über einen Zugang 7 betreten und nach vollendetem Melkvorgang über einen Ausgang 8 wieder verlassen werden. Nachdem ein Tier einen Melkstand 3 betreten hat, ist es wichtig, dass das Tier eine vordefinierte Position einnimmt. Dies wird erreicht, indem die Platzteiler 40 einen eingegrenzten Melkstand 3 bilden. Dann wird innerhalb eines Kreisabschnitts, der hier als Ansetzbereich α bezeichnet ist, das Melkzeug 5 aus der Parkposition in dem Platzteiler 40 seitlich zu dem zu melkenden Tier in die Arbeitsposition unter das Euter des Tieres verstellt und an dieses mit Hilfe einer Positionssensors 16 (siehe auch Figur 9) angesetzt.

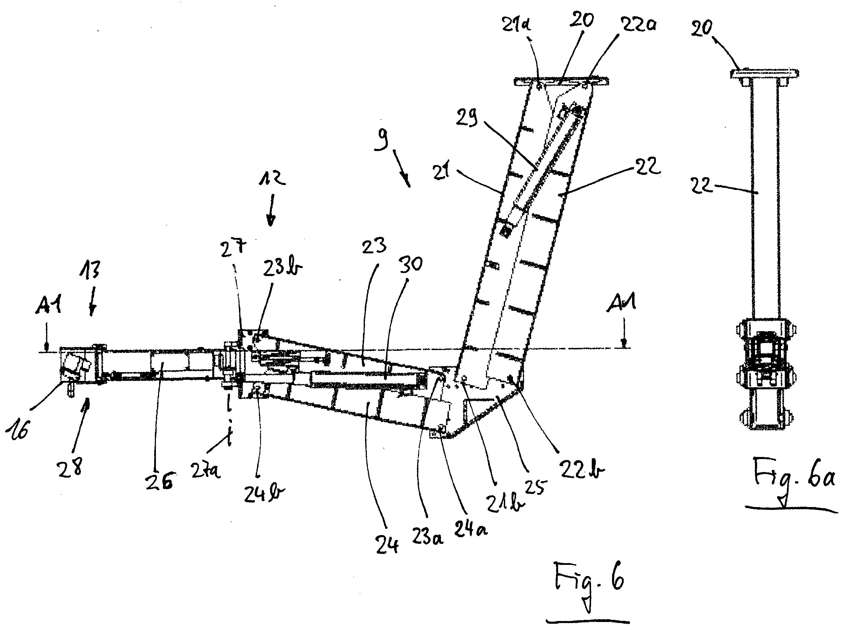

Eine Ansetztechnik zum Verstellen der Armeinrichtung 6 mit dem Melkzeug 5 ist in einem Innenraum IR der Melkstandanordnung 1 in Gestalt einer Innenrobotervorrichtung an den Kopfschmalseiten der Melkstände 3 vorgesehen. Die Innenrobotervorrichtung umfasst in diesem Ausführungsbeispiel fünf Roboterarme 9, welche an einer Schiene 14 unabhängig voneinander bewegbar sind. Der Roboterarm 9 wird unten noch ausführlich beschrieben. Jeder Roboterarm 9 weist einen geraden Radialabschnitt 12 und einen an dessen außenliegenden Ende um eine vertikale Handgelenkachse 27a (siehe Figur 6) verschwenkbaren Greifabschnitt 13 auf. Die Schiene 14 ist in diesem Ausführungsbeispiel oberhalb der Melkstände 3 außerhalb der Reichweite der Tiere und vor Verschmutzung geschützt angeordnet. Im Falle dieser Melkstandanordnung 1, die hier als Melkkarussell mit dem Drehpunkt 2 ausgebildet ist, ist die Schiene 14 konzentrisch mit dem kreisförmigen Aufbau des Melkkarussells mit dem Drehpunkt 2 des Melkkarussells als Mittelpunkt ebenfalls kreisförmig gestaltet. Auf diese Weise sind die Roboterarme 9 bei einer Drehbewegung der Melkstandanordnung 1 mit dieser Drehbewegung auch synchron mit bewegbar. Die Drehbewegung der Melkstandanordnung 1 kann ununterbrochen aufrecht erhalten bleiben.

D.h., sobald ein Tier einen Melkstand 3 betreten hat, beruhigt und bereit zum Melken ist, was z.B. über eine geeignete Tiersensorik (z.B. Kamera, Bewegungssensor, Akustiksensor usw.) und -aktorik (z.B. Futterabgabe/annahme) erfassbar ist, wird der Roboterarm 9 aus einer Ausgangsstellung an den Kopfschmalseiten der Melkstände 3 im Innenraum IR, in welcher er nicht in die Melkstände 3 hineinreicht, in Radialrichtung 15 nach außen zwischen zwei Melkstände 3 im Bereich des Platzteilers 40 in seine Ansetzstellung bewegt, ergreift einen Abschnitt der Armeinrichtung 6 und bewegt diese aus dem Bereich des Platzteilers 40 zur Seite aus der Parkposition in die Arbeitsposition unter das Euter des Tieres. Das Melkzeug 5 wird auf diese Weise seitlich an das zu melkende Tier in dem Melkstand 3 heranbewegt und von der Seite des Tieres unter dessen Euter positioniert. Dabei wird der Ansetzvorgang des Melkzeugs 5 unterstützt. Die Armeinrichtung 6 hält das Melkzeug 5, dessen Zitzenbecher an den Zitzen des Euters angesetzt werden.

Sobald das Melkzeug 5 angesetzt ist, löst sich der Roboterarm 9 von der Armeinrichtung 6 und fährt in Radialrichtung 15 in den Innenraum IR zurück in seine Ausgangsstellung. Die Armeinrichtung 6 trägt das Melkzeug 5 und somit dessen Gewicht, wobei nur die Zitzenbecher an den Zitzen des Euters angesetzt mit einem im Vergleich zu einem Gewicht des Melkzeugs 5 und der Armeinrichtung 6 geringen Gewicht einschließlich der Schläuche hängen. Während dieses Ansetzvorgangs bewegt sich das Melkkarussell ständig ohne Unterbrechung seiner Bewegung weiter, hier im Uhrzeigersinn um den Drehpunkt 2. Auch eine Drehbewegung im Gegenuhrzeigersinn ist natürlich auch möglich. Der Roboterarm 9 (bzw. die anderen ebenfalls) bewegt/bewegen sich an der Schiene 14 beim Ansetzvorgang, bevorzugt im Ansetzbereich α, in gleicher Drehrichtung und mit gleicher Winkelgeschwindigkeit synchron zum Melkkarussell. Die Schiene 14 ist oberhalb der Melkstände 3 außerhalb der Reichweite der Tiere und vor Verschmutzung geschützt angeordnet und vorzugsweise auf der Melkstandanordnung 1, d.h. auf dem sich bewegenden Teil davon, befestigt.

Die Armeinrichtung 6 weist einen Oberarm 10 und einen Unterarm 11 auf und ist mit einem Ende des Oberarms 10 in einer Lagereinheit 10a innerhalb des Platzteilers 40 um eine Vertikalachse 33 (siehe Figur 9) verschwenkbar und vertikal längs der Vertikalachse 33 verstellbar geführt und gelagert. Die Lagereinheit 10a kann am Platzteiler 40 unten oder oben, oberhalb des zu melkenden Tieres (siehe auch Figur 8) angebracht sein. Die Armeinrichtung 6 hat die Funktion, das Melkzeug 5 gewichtsneutral zu tragen und so leichtgängig zu sein, dass sie den Bewegungen des zu melkenden Tieres folgt. Die Armeinrichtung 6 wird unten noch näher beschrieben.

Die Schiene 14 kann als Einzelschiene oder Mehrfachschiene ausgebildet sein. Sie kann vorteilhaft als vollständiger Kreis, aber auch als Kreisabschnitt vorgesehen sein. Da die Roboterarme 9 zwischen die Melkstände 3 zum Ansetzen und zum Rückstellen der Armeinrichtung 6 mit dem Melkzeug 5 nur in dem begrenzten Ansetzbereich α eingreifen müssen, kann die Schiene 14 z.B. als Viertelkreisabschnitt ausgeführt sein. Es ist auch möglich, dass die Schiene 14 z.B. einen Halbkreisabschnitt bildet, wobei ein Viertelkreisabschnitt des Halbkreisabschnitts die Roboterarme 9 zum Ansetzen im Ansetzbereich α umfasst, und der andere, im Gegenuhrzeigersinn daneben angeordnet, weitere Roboterarme 9 zum Abnehmen und Rückstellen der Armeinrichtungen 6 mit dem Melkzeug 5 in die Parkposition aufweist.

Alle Melkstände 3 sind am Außenumfang der Melkstandanordnung 1 von einem Melker vom Außenbereich, d.h. von den Hinterteilschmalseiten der Melkstände 3, her frei zugänglich, so dass er jederzeit bei einem Melkvorgang eingreifen kann. Dieser Arbeitsbereich ist daher von zusätzlichen Vorrichtungen freigehalten, wohingegen die Roboterarme 9 nur im Innenraum IR in einem begrenzten Areal arbeiten. So wird der Melker nicht behindert, wenn er die gesamte Melkstandanordnung 1, die auch "Automatisiertes Außenmelkerkarussell" in diesem Ausführungsbeispiel genannt wird, steuern, pflegen und korrigierend eingreifen muss. Auch wenn ein manueller Eingriff des Melkers notwendig wird, z.B. bei abgefallenen Zitzenbechern des Melkzeugs 5, kann das Melkkarussell weiterlaufen.

Nach abgeschlossenem Melkvorgang wird das Melkzeug 5 von dem zu melkenden Tier automatisch abgenommen oder fällt von selbst in eine Warteposition oder eine Melkendeposition. Das Melkzeug 5 kann dabei von einem einfachen Aktuator, z.B. mit Kette oder Seil, dann in die Parkposition gebracht werden. Dieser einfache Aktuator kann am Platzteiler 40 angebracht sein. Auch bei diesem Vorgang bewegt sich das Melkkarussell weiter.

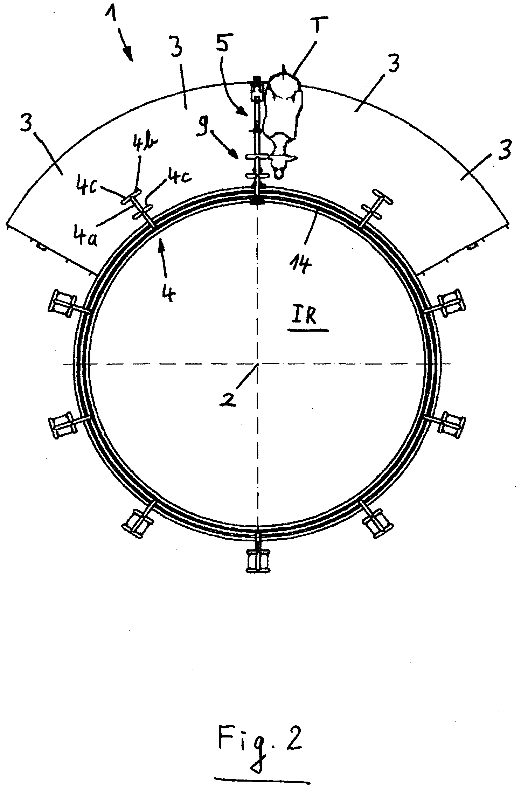

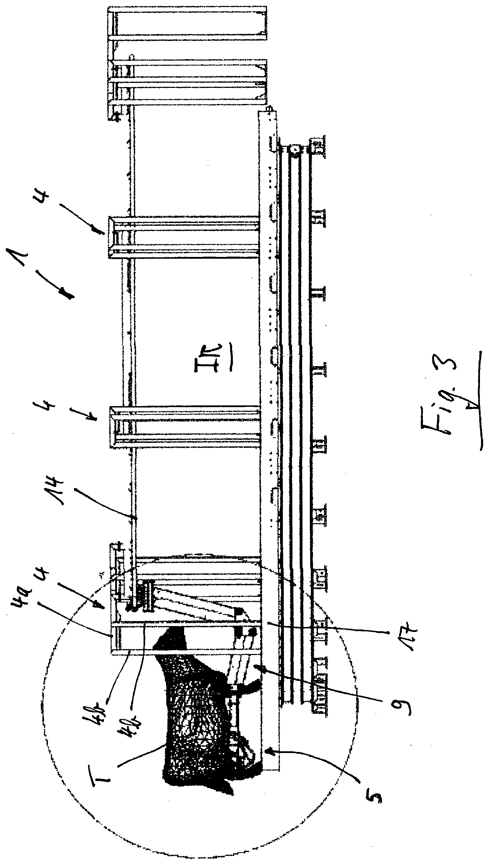

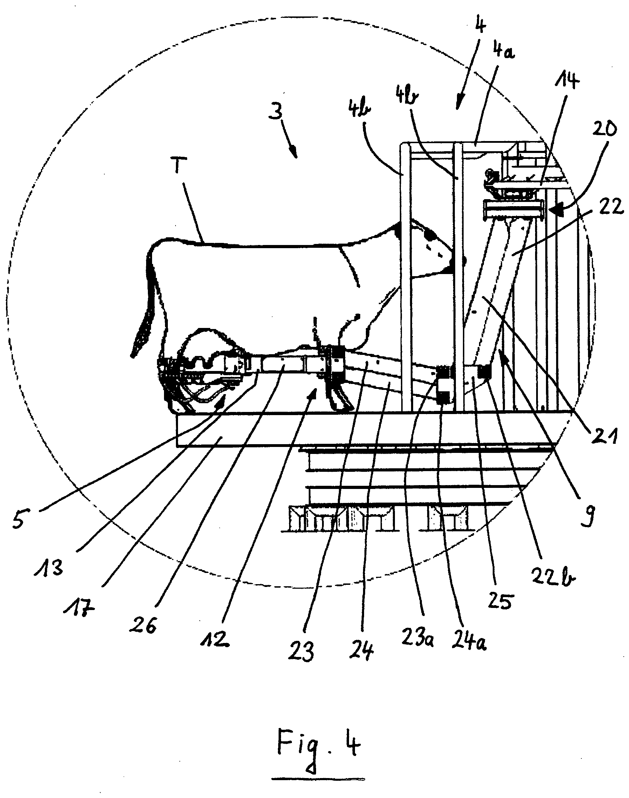

In Figur 2 ist eine schematische Draufsicht auf eine Variation des Ausführungsbeispiels der Melkstandanordnung 1 nach Figur 1 dargestellt. Figur 3 zeigt eine schematische Seitenansicht der erfindungsgemäßen Melkstandanordnung 1 nach Figur 2, und Figur 4 stellt eine vergrößerte Ansicht des umkreisten Bereichs in Figur 3 dar.

Die gezeigte Variation ist ebenfalls ein Melkkarussell mit Melkständen 3, die durch hier nicht gezeigte Platzteiler 40 (siehe Figur 1) zum Innenraum IR hin weisend getrennt sind. In einem Melkstand 3 befindet sich ein zu melkendes Tier T, welches hier eine Kuh ist. In Figur 2 ist eine umlaufende Schiene 14 in Kreisform gezeigt, die an Schienenträgern 4 oberhalb der Melkstände 3 angebracht ist (dies ist in Figur 3 und 4 deutlich zu sehen). Jeder Schienenträger 4 umfasst hier eine Horizontalstrebe 4a und vier Vertikalstreben 4b, wobei jeweils zwei Vertikalstreben 4b mit ihren oberen Enden über einen Querverbinder 4c verbunden sind. Die Querverbinder 4c verlaufen tangential zum Melkkarussell und tragen die Horizontalstrebe 4a, welche in Radialrichtung des Melkkarussells verläuft. Die Horizontalstrebe 4a ist mit ihrem radialen Außenende und in der Mitte mit den Querstreben 4c verbunden. Das andere Ende der Horizontalstrebe 4a, welches zum Drehpunkt 2 der Melkstandanordnung 1 weist, trägt die Schiene 14, die hier in Doppelausführung gestaltet ist. Die Schiene 14 ist kreisförmig und dient zur Verfahrbewegung der Roboterarme 9, von denen hier nur einer gezeigt ist. Der Roboterarm 9 ist hier radial in den Zwischenraum jeweils zwischen zwei Vertikalstreben 4b des Schienenträgers 4 in seine Arbeitsstellung verstellt.

In Figur 3 ist in einer Seitenansicht der Aufbau der Schienenträger 4 deutlicher zu erkennen. Die Melkstandanordnung 1 als Melkkarussell weist eine Standeinheit 17 auf, die um den Drehpunkt 2 drehbar ist. Auf der Standeinheit 17 sind die Melkstände 3 mit den Schienenträgern 4 angeordnet. Die Vertikalstreben 4b der Schienenträger 4 sind auf der Standeinheit 17 angebracht. Der Roboterarm 9 befindet sich in der Arbeitsstellung, in welcher das Melkzeug 5 angesetzt wird, was in Figur 4 vergrößert verdeutlicht ist.

Eine Anbringung der Armeinrichtung 6 mit dem Melkzeug 5 im radialen Verlauf des Platzteilers 40 (siehe Figur 1) ist nicht gezeigt, aber leicht vorstellbar. Sie ist so angeordnet, dass sie beim Eintreten des Tieres T in den Melkstand 3 dieses nicht behindert und vorzugsweise abgedeckt ist.

Der Roboterarm 9 der Innenrobotervorrichtung weist in diesem Ausführungsbeispiel eine Laufkatze 20, einen Roboteroberarm 21-22, einen Roboterunterarm 23-24, einen Winkel 25 und einen Handabschnitt 26 mit dem Greifabschnitt 13 auf.

Mit der Laufkatze 20 ist der Roboterarm 9 an der Schiene 14 befestigt. In der Laufkatze 20 ist ein nicht näher dargestellter Verfahrantrieb angeordnet, mit welchem der Roboterarm 9 an der Schiene 14 entlang verstellbar ist.

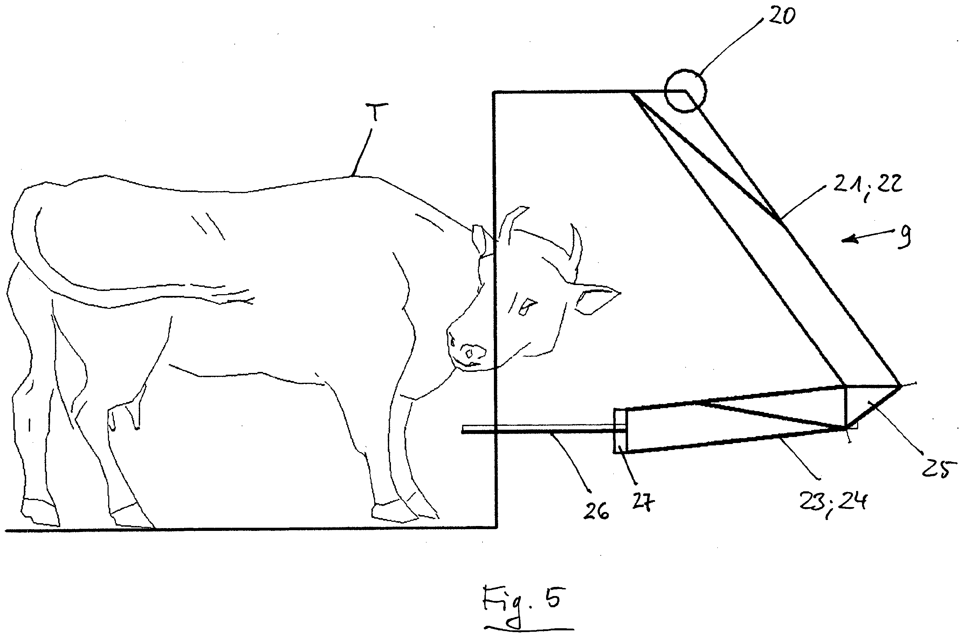

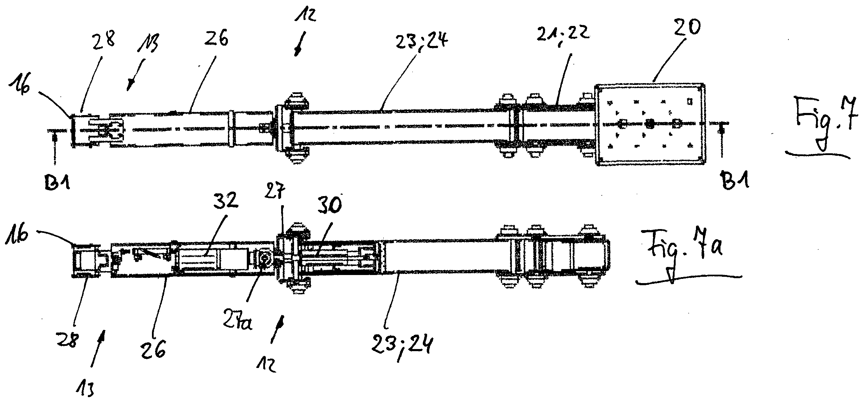

Zur weiteren Beschreibung des Roboterarms 9 wird auf die Figuren 5, 6-6a und 7-7a Bezug genommen. Figur 5 stellt eine schematische Prinzipskizze eines Innenroboters dar. Figur 6 zeigt eine Längsschnittansicht eines Ausführungsbeispiels des Roboterarms 9, wobei Figur 6a eine Vorderansicht zeigt. Figur 7 stellt eine Schnittansicht längs Schnittlinie A1-A1 aus Figur 6 des Roboterarms 9 dar, und Figur 7a zeigt eine Schnittansicht längs Schnittlinie B1-B1 nach Figur 7.

In Figur 5 ist deutlich zu erkennen, dass der Roboterarm 9 an der Kopfschmalseite des mindestens einen Melkstands 3 der Melkstandanordnung 1 zur Verstellung der Armeinrichtung 6 (siehe Figur 1) angeordnet ist, welche der Kopfseite der zu melkenden Tiere T zugeordnet ist.

Der Roboterarm 9 weist eine Parallelführung seines Roboteroberarms 21, 22 und seines Roboterunterarms 23, 24 über den Winkel 25 und die Anlenkung des Roboteroberarms 21, 22 an der Laufkatze 20, sowie die Anlenkung des Roboterunterarms 23, 24 an dem Handgelenk 27 auf. Der Roboterarm 9 wird an einer Seite des zu melkenden Tieres T in den sich radial erstreckenden Raum des Platzteilers 40 neben dem Tier T zum Ergreifen des Melkzeugs 5 an der Armeinrichtung 6 radial eingeführt. Dabei werden die Beine des Tieres T nicht berührt. Der Ansetzvorgang des Melkzeugs 5 findet von der Seite des Tieres T statt, wie es auch beim herkömmlichen Melken von Hand ein Melker ausführt. Dies ist somit ein normaler Vorgang, ohne dass entlang der Längsachse des Tieres T irgendwelche Vorrichtungen zwischen den Beinen des Tieres T eingeführt werden müssen.

In einer vorteilhaften Ausführung sind die Roboterarme 21, 22 und 23, 24 als Parallelführungsarme in Ausgestaltung als U-förmige Profile ausgebildet. Diese bilden ineinander geschachtelt jeweils die Gehäuse für Antriebe 29, 30 (siehe Figur 6 und 7). Auf diese Weise übernehmen die Roboterarme 21, 22 und 23, 24 gleichzeitig die Funktion der Parallelführung und eines Gehäuses. Durch eine solche Ummantelung der Antriebe 29, 30 werden diese einerseits gegen Schmutz und Feuchtigkeit geschützt, und andererseits werden so Mensch und Tier vor Verletzungen, insbesondere Quetschungen, geschützt.

Der Roboteroberarm 21, 22 weist zwei nebeneinander angeordnete Elemente 21, 22 auf, die jeweils mit ihren oberen Enden in einer Laufkatzenachse 21 a, 22a an der Laufkatze 20 verschwenkbar befestigt sind. Die unteren Enden des Roboteroberarms 21, 22 sind jeweils in einer Winkelachse 21 b, 22b an einer oberen Seite des Winkels 25 verschwenkbar angelenkt. Diese obere Seite ist eine Kathete des in rechtwinkliger Dreieckform ausgestalteten Winkels 25.

Der Winkel 25 kann als eine Art Ellenbogengelenk angesehen werden. An seiner radial nach außen angeordneten Kathete ist der Roboterunterarm 23, 24 mit den Enden seiner beiden Elemente 23 und 24 jeweils in einer Winkelachse 23a, 24a verschwenkbar angebracht. Die vorderen Enden des Roboterunterarms 23, 24 sind jeweils in einer Handachse 23b, 24b an einem Handgelenk 27 verschwenkbar angelenkt. An dem Handgelenk 27 ist der Handabschnitt 26 in der Handgelenkachse 27a verschwenkbar befestigt. Das radiale äußere Ende des Handabschnitts 26 trägt eine Hand 28, mit welchem es den Greifabschnitt 13 bildet. Die Hand 28 ist zur Zusammenwirkung mit der Armeinrichtung 6 entsprechend ausgebildet. Der Radialabschnitt 12 des Roboterarms 9 wird durch den Unterarm 23, 24 und den Handabschnitt 26 gebildet.

Die Elemente des Roboteroberarms 21, 22 sind mit einem Oberarmantrieb 29 gekoppelt, welcher z.B. ein Pneumatikzylinder, ein Hydraulikzylinder oder ein elektrischer Antrieb ist. In gleicher Weise sind die Elemente des Roboterunterarms 23, 24 mit einem Unterarmantrieb 30 gekoppelt, der z.B. auch ein Pneumatikzylinder sein kann.

In der Schnittansicht nach Figur 7a ist innerhalb des Roboterunterarms 23, 24 im Bereich des Handgelenks 27 ein Teil des Unterarmantriebs 30 zu erkennen. Auf der anderen, hier linken, Seite des Handgelenks 27 ist ein Schwenkantrieb innerhalb des Handabschnitts 26 angeordnet, welcher eine Verschwenkung des Handabschnitts 26 um die Handgelenkachse 27a relativ zum Roboterunterarm 23, 24 ausführt. Eine verschwenkte Stellung ist z.B. in Figur 1 gezeigt. Innerhalb des Handabschnitts 26 kann außerdem ein nicht näher gezeigter Greifantrieb vorgesehen, welcher den Greifabschnitt 16 der Hand 28 zum Ergreifen und Loslassen der Armeinrichtung 6 betätigt.

Die Achsen 21 a-b, 22a-b, 23a-b, 24a-b sind parallel angeordnet und verlaufen rechtwinklig zur Vertikalen bzw. tangential zum Melkkarussell mit dem Drehpunkt 2 (vgl. Figur 1). Die Achse 27 steht senkrecht dazu und parallel zur Vertikalen. Der Greifabschnitt 26 bzw. die Hand 28 kann auch um deren jeweilige Längsachse drehbar ausgebildet sein.

In Figur 8 ist eine schematische Prinzipskizze eines zweiten Ausführungsbeispiels eines Melkstands 3 der erfindungsgemäßen Melkstandanordnung 1 dargestellt. Figur 9 zeigt dazu eine schematische Draufsicht des Melkstands 3 nach Figur 8.

Der Unterschied dieser Variation zu dem oben beschriebenen Ausführungsbeispiel besteht darin, dass der Boden des Melkstands 3 mit einer Stufe 19 versehen ist. Die Stufe 19 trennt die Oberfläche der Standeinheit 17 von einer relativ zur Standeinheit 17 höheren Vorderfußplatte 18. Die Vorderfußplatte 18 ist zum Innenraum IR der Melkstandanordnung 1 hin weisend angeordnet. D.h., das zu melkende Tier T steht mit seinen Hinterhufen auf der Standeinheit 17 und mit seinen Vorderhufen auf der erhöhten Vorderfußplatte 18. Die Stufe 19 ist mit einer Öffnung versehen, durch welche der Roboterarm 9 in Radialrichtung 15 in die in Figur 8 gezeigte Arbeitsstellung durchführbar ist, um die Armeinrichtung 6 mit dem Melkzeug 5 zu ergreifen und in deren Arbeitsposition zum Ansetzen am Euter des Tieres T zu verstellen.

Der Radialabschnitt 12 des Roboterarms 9 ist dabei gerade ausgebildet und führt an seinem Ende die Hand 28 am Handgelenk 27 durch die Öffnung der Stufe 19 durch. Das Handgelenk 27 ist in diesem Ausführungsbeispiel entweder um eine zusätzliche Nickachse oder seine Längsachse verschwenkbar (dabei bildet die Handgelenkachse 27a eine Nickachse), um eine Nickbewegung auszuführen, die in Figur 8 angedeutet ist. Der Roboterarm 9 kann auch z.B. in der Laufkatze 20 um eine weitere Vertikalachse 33' (siehe Figur 9) verschwenkbar sein, wozu ein entsprechender Antrieb vorgesehen ist.

In Figur 8 ist außerdem prinzipiell eine Anordnung der Lagereinheit 10a der Armeinrichtung 6 oberhalb des Tieres T z.B. an dem radialen äußeren Ende der Horizontalstrebe 4a des Schienenträgers 4 nach Figur 4. Hier ist eine Vertikalwelle 6a gezeigt, welche in der Lagereinheit 10a um die Vertikalachse 33 verschwenkbar und längs der Vertikalachse 33 verschiebbar geführt ist. Andere Anbringungsarten sind selbstverständlich möglich, z.B. auf der oder durch die Standeinheit 17, wobei sich die Vertikalwelle 6 durch die Standeinheit 17 hindurch erstreckt.

Das untere Ende der Vertikalwelle 6a ist mit der Armeinrichtung 6, hier mit einem Ende des Oberarms 10 gekoppelt. Die Armeinrichtung 6 ist über die Vertikalwelle 6a um die Vertikalachse 33 verschwenkbar. Der Oberarm 10 ist mit dem Unterarm 11 in einer Zwischenachse 34 verschwenkbar verbunden. Das Melkzeug 5 ist am Unterarm 11 an dessen Ende, das der verschwenkbaren Verbindung mit dem Oberarm 10 gegenüberliegt, in einer Trägerachse 35 verschwenkbar verbunden. Das Melkzeug 5 weist in diesem Ausführungsbeispiel vier Zitzenbecher 5a auf: Jeder der vier Zitzenbecher 5a kann unabhängig von den anderen individuell angesetzt werden.

Der Roboterarm 9 ist außerdem mit dem Positionssensor 16 versehen, welcher hier als ein optischer Sensor ausgebildet ist. Mit dem Positionssensor 16 wird das Melkzeug 5 mit der Armeinrichtung 6 mittels des Roboterarms 9 aus der Parkposition in die Arbeitsposition verstellt.

In der Arbeitsposition kann das Melkzeug 5 verschiedene Stellungen einnehmen. Eine Ansetzstellung dient z.B. dazu, die Zitzenbecher 5a so zu positionieren, dass sie jeweils an eine entsprechende Zitze eines zu melkenden Tieres angehängt werden können. Während des Melkvorgangs unterstützt die Armeinrichtung 6 das Melkzeug 5 derart, dass das Gewicht des Melkzeugs den Melkvorgang nicht beeinträchtigt. Nach einer vollendeten Melkung werden die Zitzenbecher 5a wieder vom Euter des gemolkenen Tieres gelöst und in die Parkposition gebracht.

Eine Steuerung der Bewegungsvorgänge der Roboterarme 9 und Positionierung des Melkzeugs 5 erfolgt mittels einer Steuereinrichtung, die hier nicht gezeigt ist. Die Steuereinrichtung ist mit dem Positionssensor 16 und den jeweiligen Antrieben und Sensoren der Roboterarme 9 verbunden.

Eine Parallelführung des Melkzeugs 5 kann durch eine feste Verbindung mit zwischenliegenden Gelenken zwischen Melkzeug 5 und der Armeinrichtung 6 mit Schubstangen realisiert werden. Die Parallelität kann z.B. über entsprechende Justierungen variiert werden.

Die Erfindung ist nicht auf die oben dargestellten Ausführungsbeispiele beschränkt sondern im Rahmen der beigefügten Ansprüche modifizierbar.

Es ist möglich, dass die Schiene 14 z.B. einen Halbkreisabschnitt bildet, wobei ein Viertelkreisabschnitt des Halbkreisabschnitts die Roboterarme 9 zum Ansetzen im Ansetzbereich α umfasst, und der andere, im Gegenuhrzeigersinn daneben angeordnet, weitere Roboterarme 9 zum Abnehmen und Rückstellen der Armeinrichtungen 6 mit dem Melkzeug 5 in die Parkposition aufweist.

Der Positionssensor 16 kann in einer Erweiterung z.B. auch Bilder über den Zustand des Euters des zu melkenden Tieres liefern und somit zur Kenntnis des Gesundheitszustandes des zu melkenden Tieres beitragen.

Jeder Melkstand 3 kann für sich aktiviert oder gesperrt werden. Auch bei gesperrten Melkständen 3 kann die Melkstandanordnung 1 weiter betrieben werden, z.B. ist ein Anhalten des Melkkarussells nicht erforderlich.

Jeder Melkstand 3 kann für ein Tier individuell vorbereitet werden, z.B. vordefinierte Arbeitsposition des Melkzeugs 5 mit der Armeinrichtung 6, wobei die entsprechenden Vorpositionierdaten je nach Tier, das beim Betreten des Melkstands 3 durch eine Erkennungseinrichtung "erkannt" wird, und aus einer Datenbank der Steuervorrichtung des jeweiligen Roboterarms 9 zur Verfügung gestellt werden.

Außerdem kann jeder Melkstand 3 eine Futtereinrichtung besitzen.

Die Melkstandanordnung 1 als Melkkarussell kann so ausgebildet sein, dass auch mehrere 360° Drehungen für einen Melkvorgang eines bestimmten Tieres erfolgen können, wenn dies notwendig wird. Dann wird ein Auslass des Tieres aus dem Melkstand 3 verhindert, wenn dieser am Ausgang 8 ankommt.

Die Armeinrichtung 6 kann Zugmittel, z.B. Ketten, Zahnriemen u.dgl., z.B. innerhalb von Oberarm 10 und Unterarm 11 oder in einer Kombination mit z.B. Schubstangen aufweisen, welche eine Parallelführung bewirken und eine Bewegungsdämpfung bilden.

Das Melkzeug kann natürlich auch für milchgebende Tiere mit Eutern, die eine unterschiedliche Anzahl von Zitzen, z.B. 2, 3 oder 4, haben, verwendet werden.

So ist es z.B. denkbar, dass die Melkstandanordnung 1 mehrere nebeneinander angeordnete Melkstände 3 aufweist. Dabei ist die Schiene 14 nicht kreisförmig, sondern an die Anordnung der Melkstände 3 angepasst, z.B. geradlinig.

In der Variation nach Figur 8 und 9 kann der Roboterarm 9 sowohl seitlich am Tier T durch die Öffnung als auch unter den Vorderhufen in der Längsachse des Tieres T positioniert werden, d.h. die Radialrichtung 15 des Roboterarms 9 verläuft mittig unter dem Tier T, das Melkzeug 5 wird links oder rechts vom Tier T aus dem jeweiligen Seitenbereich zwischen Vorder- und Hinterbeinen des Tieres T in dessen Mitte unter das Euter gefahren und angesetzt. Dabei ist der Roboterarm 9 nicht im Sichtbereich des Tieres T.

Die Armeinrichtung 6 mit dem Melkzeug 5 kann zusätzlichen Überlastschutz, z.B. durch eine Parallelführung mit Riemen aufweisen, die Tritten eines Tieres T nachgeben kann.

Es ist auch denkbar, dass ein halbautomatisches Ansetzen des Melkzeugs 5 erfolgen kann, indem der am Platzteiler 40 angebrachte einfache Aktuator (nicht gezeigt) z.B. mit Ketten oder Seilen, das Melkzeug 5 in eine Position vorpositioniert, z.B. ohne Positionssensor 16, unter das Euter des zu melkenden Tieres T, wobei das Ansetzen der Zitzenbecher 5a durch den Melker erfolgt. Die Kräfte des Melkers werden dadurch nur zum Anlegen der Zitzenbecher 5a, nicht für das gesamte Melkzeug 5 (Positionieren und Heben) erforderlich.

### Bezugszeichen

- 1: Melkstandanordnung
- 2: Drehpunkt
- 3: Melkstand
- 4: Schienenträger
- 4a: Horizontalstrebe
- 4b: Vertikalstrebe
- 4c: Querverbinder
- 5: Melkzeug
- 5a: Zitzenbecher
- 6: Armeinrichtung
- 6a: Vertikalwelle
- 7: Zugang
- 8: Ausgang
- 9: Roboterarm
- 10: Oberarm
- 10a: Lagereinheit
- 11: Unterarm
- 12: Radialabschnitt
- 13: Greifabschnitt
- 14: Schiene
- 15: Radialrichtung
- 16: Positionssensor
- 17: Standeinheit
- 18: Vorderfußplatte
- 19: Stufe
- 20: Laufkatze
- 21,22: Roboteroberarm
- 21a, 22a: Laufkatzenachse
- 21b, 22b: Winkelachse
- 23, 24: Roboterunterarm
- 23a, 24a: Winkelachse
- 23b, 24b: Handachse
- 25, 25': Winkel
- 26: Handabschnitt
- 27: Handgelenk
- 27a: Handgelenkachse
- 28: Hand
- 29: Oberarmantrieb
- 30: Unterarmantrieb
- 31: - *entfällt -*
- 32: Schwenkantrieb
- 33, 33': Vertikalachse
- 34: Zwischenachse
- 35: Trägerachse
- 40: Platzteiler
- α: Ansetzbereich
- IR: Innenraum
- T: Tier

## Patentansprüche

1. Melkstandanordnung (1), insbesondere Melkkarussell, mit mindestens einem Melkstand (3) zum Melken von milchgebenden Tieren (T), einer Innenrobotervorrichtung mit mindestens einem Roboterarm (9), wobei der mindestens eine Melkstand (3) zwei Längsseiten und zwei Schmalseiten, nämlich eine Kopfschmalseite und eine Hinterteilschmalseite, von denen eine Schmalseite als Kopfschmalseite der Kopfseite eines zu melkenden milchgebenden Tieres (T) zugeordnet ist, und eine Armeinrichtung (6) mit einem Melkzeug (5), welche aus einer Parkposition in eine Arbeitsposition und zurück verstellbar ist, aufweist, **dadurch gekennzeichnet, dass** der mindestens eine Roboterarm (9) an der Kopfschmalseite des mindestens einen Melkstands (3) der Melkstandanordnung (1) zur Verstellung der Armeinrichtung (6) angeordnet ist.

2. Melkstandanordnung (1) nach Anspruch 1, **dadurch gekennzeichnet, dass** die Armeinrichtung (6) mit dem Melkzeug (5) in der Parkposition längs einer der Längsseiten des Melkstands (3) angeordnet ist.

3. Melkstandanordnung (1) nach Anspruch 1 oder 2, **dadurch gekennzeichnet, dass** der mindestens eine Roboterarm (9) zur Verstellung der Armeinrichtung (6) in einem Vollautomatikbetrieb von der Parkposition in der Arbeitsposition in eine Ansetzposition zum automatischen Ansetzen des Melkzeugs (5) an die Zitzen des zu melkenden Tieres (T) ausgebildet ist.

4. Melkstandanordnung (1) nach einem der Ansprüche 1 bis 3, **dadurch gekennzeichnet, dass** der mindestens eine Roboterarm (9) an einer Schiene (14), insbesondere in einem Ansetzbereich (α), verfahrbar und geführt ist.

5. Melkstandanordnung (1) nach Anspruch 4, **dadurch gekennzeichnet, dass** mehrere Roboterarme (9) auf einer Plattform an der Schiene (14) verfahrbar und geführt sind.

6. Melkstandanordnung (1) nach Anspruch 4 oder 5, **dadurch gekennzeichnet, dass** die Schiene (14) bei einer Melkstandanordnung (1) in Melkkarussellausführung konzentrisch zu einem Drehpunkt (2) des Melkarussells, und bei einer Melkstandanordnung (1) in gerader Ausführung parallel zu der Melkstandanordnung (1) angeordnet ist.

7. Melkstandanordnung (1) nach einem der Ansprüche 4 bis 6, **dadurch gekennzeichnet, dass** die Schiene (14) an der Melkstandanordnung (1) befestigt ist.

8. Melkstandanordnung (1) nach einem der Ansprüche 4 bis 7, **dadurch gekennzeichnet, dass** der mindestens eine Roboterarm (9) der Innenrobotervorrichtung an der Schiene (14) synchron mit einer Bewegung der Melkstandanordnung (1) und unabhängig von der Bewegung der Melkstandanordnung (1) verfahrbar ist.

9. Melkstandanordnung (1) nach einem der vorhergehenden Ansprüche, **dadurch gekennzeichnet, dass** der mindestens eine Roboterarm (9) in einer Radialrichtung (15) für eine Verstellung des Melkzeugs (5) aus der Parkposition in die Arbeitsposition und zurück verstellbar ausgebildet ist.

10. Melkstandanordnung (1) nach Anspruch 9, **dadurch gekennzeichnet, dass** der mindestens eine Melkstand (3) einen von einer Oberfläche einer Standeinheit (17) des Melkstands (3) durch eine Stufe (19) getrennten, höher angeordneten Bereich mit einer Vorderfußplatte (18) aufweist.

11. Melkstandanordnung (1) nach Anspruch 9 oder 10, **dadurch gekennzeichnet, dass** der mindestens eine Roboterarm (9) in der Radialrichtung (15) seitlich parallel oder im Wesentlichen annähernd parallel zu der Längsachse des zu melkenden Tieres (T) verstellbar ausgebildet ist.

12. Melkstandanordnung (1) nach Anspruch 10, **dadurch gekennzeichnet, dass** der mindestens eine Roboterarm (9) in der Radialrichtung (15) durch eine Öffnung der Stufe (19) hindurch entlang der Längsachse des zu melkenden Tieres (T) verstellbar ausgebildet ist.

13. Melkstandanordnung (1) nach einem der vorhergehenden Ansprüche, **dadurch gekennzeichnet, dass** die Armeinrichtung (6) mit dem Melkzeug (5) in der Parkposition in einem Platzteiler (40), der an einer Längsseite des Melkstands (3) angeordnet ist, oder in einem Bereich in einer Längsachse des Platzteilers (40) angeordnet ist, und seitlich zu dem zu melkenden Tier (T) in die Arbeitsposition verstellbar ist.

14. Melkstandanordnung (1) nach einem der vorhergehenden Ansprüche, **dadurch gekennzeichnet, dass** die Armeinrichtung (6) einen Oberarm (10) und einen damit verschwenkbar gekoppelten Unterarm (11) aufweist.

15. Melkstandanordnung (1) nach Anspruch 13 oder 14, **dadurch gekennzeichnet, dass** die Armeinrichtung (6) mittels einer Lagereinheit (10a) drehbar und in einer Vertikalrichtung gelagert und geführt ist.

16. Melkstandanordnung (1) nach Anspruch 15, **dadurch gekennzeichnet, dass** die Lagereinheit (10a) am Platzteiler 40 unten oder oben, unterhalb einer Standeinheit (17) des mindestens einen Melkstands (3) oder auf der Standeinheit (17) des mindestens einen Melkstands (3) angeordnet ist.

17. Melkstandanordnung (1) nach einem der vorhergehenden Ansprüche, **dadurch gekennzeichnet, dass** die Armeinrichtung (6) mit dem Melkzeug (5) in der Parkposition in dem Platzteiler (40) in einer Öffnung einer Verkleidung des Platzteilers (40) angeordnet ist.

18. Melkstandanordnung (1) nach Anspruch 17, **dadurch gekennzeichnet, dass** die Öffnung der Verkleidung des Platzteilers (40) mit der darin in der Parkposition angeordneten mit einer Schutzabdeckung verschließbar ist.

19. Melkstandanordnung (1) nach einem der vorhergehenden Ansprüche, **dadurch gekennzeichnet, dass** in dem Platzteiler (40) oder in dem Bereich der Parkposition der Armeinrichtung (6) mit dem Melkzeug (5) eine Reinigungseinrichtung für das Melkzeug (5) angeordnet ist.

20. Melkstandanordnung (1) nach einem der vorhergehenden Ansprüche, **dadurch gekennzeichnet, dass** die Armeinrichtung (6) mit dem Melkzeug (5) einen Überlastschutz aufweist.

21. Melkstandanordnung (1) nach einem der vorhergehenden Ansprüche, **dadurch gekennzeichnet, dass** die Armeinrichtung (6) eine Parallelführung für das Melkzeug (5) aufweist.

22. Melkstandanordnung (1) nach einem der vorhergehenden Ansprüche, **dadurch gekennzeichnet, dass** die Parallelführung Schubstangen oder/und Zugmittel aufweist.

23. Melkstandanordnung (1) nach Anspruch 22, **dadurch gekennzeichnet, dass** die Zugmittel Riemen sind.

24. Melkstandanordnung (1) nach Anspruch 23, **dadurch gekennzeichnet, dass** die Zugmittel einen Überlastschutz bzw. eine Unterstützung eines Überlastschutzes bilden.

25. Melkstandanordnung (1) nach einem der vorhergehenden Ansprüche, **dadurch gekennzeichnet, dass** der Roboterarm (9) mindestens einen Positionssensor (16) aufweist.

26. Melkstandanordnung (1) nach einem der vorhergehenden Ansprüche, **dadurch gekennzeichnet, dass** die Armeinrichtung (6) in einem Halbautomatikbetrieb von der Parkposition in die Arbeitsposition mittels eines einfachen Aktuators verstellbar ist, wobei die Arbeitsposition eine feste Vorposition ist, die durch Anschlagmittel vorher festlegbar ist.

## Claims

1. A milking parlor arrangement (1), in particular a rotary milking parlor, having at least one milking parlor (3) for milking milk-producing animals (T), an inner robot device having at least one robot arm (9), wherein the at least one milking parlor (3) comprises two longitudinal sides and two narrow sides, namely one head narrow side and one hind quarter narrow side, of which one narrow side as head narrow side is associated with the head end of an animal (T) to be milked, and one arm device (6) with a milking cluster (5) which is adjustable from a park position into an operating position and back, **characterized in that** the at least one robot arm (9) is arranged on the head narrow side of the at least one milking parlor (3) of the milking parlor arrangement (1) for adjusting the arm device (6).

2. The milking parlor arrangement (1) as claimed in claim 1, **characterized in that** in the park position the arm device (6) with the milking cluster (5) is arranged along one of the longitudinal sides of the milking parlor (3).

3. The milking parlor arrangement (1) as claimed in claim 1 or 2, **characterized in that** the at least one robot arm (9) is realized for adjusting the arm device (6) in a fully automatic mode from the park position in the operating position into a positioning position for automatically positioning the milking cluster (5) onto the teats of the animal (T) to be milked.

4. The milking parlor arrangement (1) as claimed in one of claims 1 to 3, **characterized in that** the at least one robot arm (9) is movable and guided on a rail (14), in particular within a positioning region (α).

5. The milking parlor arrangement (1) as claimed in claim 4, **characterized in that** several robot arms (9) are movable and guided on a platform on the rail (14).

6. The milking parlor arrangement (1) as claimed in claim 4 or 5, **characterized in that** in the case of a milking parlor arrangement (1) designed as a rotary milking parlor, the rail (14) is arranged concentrically to a pivot point (2) of the rotary milking parlor, and in the case of a milking parlor arrangement (1) in a straight design it is arranged parallel to the milking parlor arrangement (1).

7. The milking parlor arrangement (1) as claimed in one of claims 4 to 6, **characterized in that** the rail (14) is fastened on the milking parlor arrangement (1).

8. The milking parlor arrangement (1) as claimed in one of claims 4 to 7, **characterized in that** the at least one robot arm (9) of the inner robot device is movable on the rail (14) synchronously with a movement of the milking parlor arrangement (1) and independently of the movement of the milking parlor arrangement (1).

9. The milking parlor arrangement (1) as claimed in one of the preceding claims, **characterized in that** the at least one robot arm (9) is realized so as to be adjustable in a radial direction (15) for adjusting the milking cluster (5) from the park position into the operating position and back.

10. The milking parlor arrangement (1) as claimed in claim 9, **characterized in that** the at least one milking parlor (3) comprises a region which is separated from a surface of a standing unit (17) of the milking parlor (3) by a step (19), is arranged at a greater height and has a front foot plate (18).

11. The milking parlor arrangement (1) as claimed in claim 9 or 10, **characterized in that** the at least one robot arm (9) is realized so as to be adjustable in the radial direction (15) at the side parallel or substantially approximately parallel to the longitudinal axis of the animal (T) to be milked.

12. The milking parlor arrangement (1) as claimed in claim 10, **characterized in that** the at least one robot arm (9) is realized so as to be adjustable in the radial direction (15) through an opening through the step (19) along the longitudinal axis of the animal (T) to be milked.

13. The milking parlor arrangement (1) as claimed in one of the preceding claims, **characterized in that** the arm device (6) with the milking cluster (5) is arranged in the park position in a space divider (40), which is arranged on a longitudinal side of the milking parlor (3), or is arranged in a region in a longitudinal axis of the space divider (40), and is adjustable into the operating position at the side of the animal (T) to be milked.

14. The milking parlor arrangement (1) as claimed in one of the preceding claims, **characterized in that** the arm device (6) comprises an upper arm (10) and a lower arm (11) which is pivotably coupled therewith.

15. The milking parlor arrangement (1) as claimed in claim 13 or 14, **characterized in that** the arm device (6) is mounted and guided by means of a bearing unit (10a) so as to be rotatable and in a vertical direction.

16. The milking parlor arrangement (1) as claimed in claim 15, **characterized in that** the bearing unit (10a) at the top or bottom of the space divider (40) is arranged below a standing unit (17) of the at least one milking parlor (3) or on the standing unit (17) of the at least one milking parlor (3).

17. The milking parlor arrangement (1) as claimed in one of the preceding claims, **characterized in that** the arm device (6) with the milking cluster (5) is arranged in the park position in the space divider (40) in an opening of a cladding of the space divider (40).

18. The milking parlor arrangement (1) as claimed in claim 17, **characterized in that** the opening of the cladding of the space divider (40) with the arranged therein in the park position is closable by way of a protective covering.

19. The milking parlor arrangement (1) as claimed in one of the preceding claims, **characterized in that** a cleaning device for the milking cluster (5) is arranged in the space divider (40) or in the region of the park position of the arm device (6) with the milking cluster (5).

20. The milking parlor arrangement (1) as claimed in one of the preceding claims, **characterized in that** the arm device (6) with the milking cluster (5) comprises an overload protection.

21. The milking parlor arrangement (1) as claimed in one of the preceding claims, **characterized in that** the arm device (6) comprises parallel guiding for the milking cluster (5).

22. The milking parlor arrangement (1) as claimed in one of the preceding claims, **characterized in that** the parallel guiding comprises push rods or/and pulling means.

23. The milking parlor arrangement (1) as claimed in claim 22, **characterized in that** the pulling means are belts.

24. The milking parlor arrangement (1) as claimed in claim 23, **characterized in that** the pulling means form an overload protection or a support of an overload protection.

25. The milking parlor arrangement (1) as claimed in one of the preceding claims, **characterized in that** the robot arm (9) comprises at least one positioning sensor (16).

26. The milking parlor arrangement (1) as claimed in one of the preceding claims, **characterized in that** in a semi-automatic mode, the arm device (6) is adjustable from the park position into the operating position by means of a simple actuator, wherein the operating position is a fixed pre-position which is fixable beforehand by stopping means.

## Revendications

1. Disposition de stalles de traite (1), en particulier salle de traite rotative, avec au moins une stalle de traite (3) pour la traite d'animaux donnant du lait (T), un dispositif de robot intérieur avec au moins un bras de robot (9), l'au moins une stalle de traite (3) présentant deux grands côtés et deux petits côtés, à savoir un petit côté du côté de la tête et un petit côté du côté de la croupe, l'un des petits côtés étant associé comme petit côté du côté de la tête au côté de la tête d'un animal donnant du lait à traire (T) et présentant un dispositif de bras (6) avec un faisceau trayeur (5), qui peut être déplacé d'une position de rangement à une position de travail et retour, **caractérisée en ce que** l'au moins un bras de robot (9) est disposé sur le petit côté du côté de la tête de l'au moins une stalle de traite (3) de la disposition de stalles de traite (1) en vue du déplacement du dispositif de bras (6).

2. Disposition de stalles de traite (1) selon la revendication 1, **caractérisée en ce que** le dispositif de bras (6) avec le faisceau trayeur (5) est disposé, dans la position de rangement, le long d'un des grands côtés du stalle de traite (3).

3. Disposition de stalles de traite (1) selon la revendication 1 ou 2, **caractérisée en ce que** l'au moins un bras de robot (9) est conçu pour déplacer le dispositif de bras (6) en mode entièrement automatique de la position de rangement à la position de travail dans une position d'application en vue de l'application automatique du faisceau trayeur (5) sur les pis de l'animal à traire (T).

4. Disposition de stalles de traite (1) selon l'une des revendications 1 à 3, **caractérisée en ce que** l'au moins un bras de robot (9) est mobile et guidé sur un rail (14), en particulier dans une zone d'application (α).

5. Disposition de stalles de traite (1) selon la revendication 4, **caractérisée en ce que** plusieurs bras de robot (9) sont mobiles et guidés sur le rail (14) sur une plateforme.

6. Disposition de stalles de traite (1) selon la revendication 4 ou 5, **caractérisée en ce que** le rail (14) est disposé, dans une disposition de stalles de traite (1) réalisée comme une salle de traite rotative, de façon concentrique par rapport à un centre de rotation (2) de la salle de traite rotative, et dans une disposition de stalles de traite (1) rectiligne, parallèlement à la disposition de stalles de traite (1).

7. Disposition de stalles de traite (1) selon l'une des revendications 4 à 6, **caractérisée en ce que** le rail (14) est fixé sur la disposition de stalles de traite (1).

8. Disposition de stalles de traite (1) selon l'une des revendications 4 à 7, **caractérisée en ce que** l'au moins un bras de robot (9) du dispositif de robot intérieur est mobile sur le rail (14) de façon synchrone avec un mouvement de la disposition de stalles de traite (1) et indépendamment du mouvement de la disposition de stalles de traite (1).

9. Disposition de stalles de traite (1) selon l'une des revendications précédentes, **caractérisée en ce que** l'au moins un bras de robot (9) est conçu pour être mobile dans un sens radial (15) en vue du déplacement du faisceau trayeur (5) de la position de rangement à la position de travail et retour.

10. Disposition de stalles de traite (1) selon la revendication 9, **caractérisée en ce que** l'au moins un stalle de traite (3) présente une zone surélevée, séparée par une marche (19) d'une surface d'une unité d'appui (17) de la stalle de traite (3), avec une plaque pour les pattes antérieures (18).

11. Disposition de stalles de traite (1) selon la revendication 9 ou 10, **caractérisée en ce que** l'au moins un bras de robot (9) est conçu pour se déplacer dans le sens radial (15) sur le côté parallèlement ou sensiblement parallèlement à l'axe longitudinal de l'animal à traire (T).

12. Disposition de stalles de traite (1) selon la revendication 10, **caractérisée en ce que** l'au moins un bras de robot (9) est conformé pour se déplacer dans le sens radial (15) à travers une ouverture de la marche (19) le long de l'axe longitudinal de l'animal à traire (T).

13. Disposition de stalles de traite (1) selon l'une des revendications précédentes, **caractérisée en ce que** le dispositif de bras (6) avec le faisceau trayeur (5) est disposé, dans la position de rangement, dans une cloison (40) disposée sur un grand côté de la stalle de traite (3), ou dans une zone sur un axe longitudinal de la cloison (40), et peut être déplacé sur le côté de l'animal à traire (T) dans la position de travail.

14. Disposition de stalles de traite (1) selon l'une des revendications précédentes, **caractérisée en ce que** le dispositif de bras (6) présente un bras supérieur (10) et un bras inférieur (11) couplé à celui-ci de façon pivotante.

15. Disposition de stalles de traite (1) selon la revendication 13 ou 14, **caractérisée en ce que** le dispositif de bras (6) est supporté et guidé de façon pivotante et dans un sens vertical au moyen d'une unité de palier (10a).

16. Disposition de stalles de traite (1) selon la revendication 15, **caractérisée en ce que** l'unité de palier (10a) est disposée en haut ou en bas de la cloison (40), en dessous d'une unité d'appui (17) de l'au moins une stalle de traite (3) ou sur l'unité d'appui (17) de l'au moins un stalle de traite (3).

17. Disposition de stalles de traite (1) selon l'une des revendications précédentes, **caractérisée en ce que** le dispositif de bras (6) est disposé avec le faisceau trayeur (5), dans la position de rangement dans la cloison (40), dans une ouverture de l'habillage de la cloison (40).

18. Disposition de stalles de traite (1) selon la revendication 17, **caractérisée en ce que** l'ouverture dans l'habillage de la cloison (40) avec disposé à l'intérieur dans la position de rangement peut être fermée avec une couverture de protection.

19. Disposition de stalles de traite (1) selon l'une des revendications précédentes, **caractérisée en ce qu'**un dispositif de nettoyage pour le faisceau trayeur (5) est disposé dans la cloison (40) ou dans la zone de la position de rangement du dispositif de bras (6) avec le faisceau trayeur (5).

20. Disposition de stalles de traite (1) selon l'une des revendications précédentes, **caractérisée en ce que** le dispositif de bras (6) avec le faisceau trayeur (5) présente une protection contre la surcharge.

21. Disposition de stalles de traite (1) selon l'une des revendications précédentes, **caractérisée en ce que** le dispositif de bras (6) présente un guidage parallèle pour le faisceau trayeur (5).

22. Disposition de stalles de traite (1) selon l'une des revendications précédentes, **caractérisée en ce que** le guidage parallèle présente des tringles de poussée et/ou des moyens de traction.

23. Disposition de stalles de traite (1) selon la revendication 22, **caractérisée en ce que** les moyens de traction sont des courroies.

24. Disposition de stalles de traite (1) selon la revendication 23, **caractérisée en ce que** les moyens de traction forment une protection contre la surcharge ou une aide à la protection contre la surcharge.

25. Disposition de stalles de traite (1) selon l'une des revendications précédentes, **caractérisée en ce que** le bras de robot (9) présente au moins un capteur de position (16).

26. Disposition de stalles de traite (1) selon l'une des revendications précédentes, **caractérisée en ce que** le dispositif de bras (6) peut être déplacé en mode semi-automatique de la position de rangement à la position de travail au moyen d'un actionneur simple, la position de travail étant une position avancée fixe qui peut être déterminée au préalable par des moyens formant butée.
